# EUROPÄISCHE PATENTSCHRIFT

(11) **EP 2 136 146 B1**
(45) Veröffentlichungstag und Bekanntmachung des Hinweises auf die Patenterteilung: **08.08.2018**
(21) Anmeldenummer: 09007377.6
(22) Anmeldetag: 04.06.2009
(51) Int. Cl.: F24D 17/00, F24D 19/10

(54) **Vorrichtung und Verfahren zur Durchflusssteuerung von solarbetriebenen Trinkwasser-Durchflussgeräten**
Device and method for controlling the throughput of solar-operated drinking water flow devices
Dispositif et procédé de commande du débit d'appareils de débit d'eau potable entraînés de manière solaire

(30) Priorität: 18.06.2008 DE 102008028984
(43) Veröffentlichungstag der Anmeldung: 23.12.2009
(73) Patentinhaber: Robert Bosch GmbH, 70442 Stuttgart (DE)
(72) Erfinder: Kosok, Jürgen, 48565 Steinfurt (DE)

(56) Entgegenhaltungen:
- DE-A1- 10 212 072
- DE-A1-102005 003 455
- DE-A1-102008 043 291

## Beschreibung

Die Erfindung betrifft eine Vorrichtung zur Durchflusssteuerung für ein solarenergiebetriebenes Warmwasser-Durchflussgerät, insbesondere für eine Trinkwasserversorgung mit Durchlauferhitzer nach dem Oberbegriff des Patentanspruches 1 und nach dem Oberbegriff des Patentanspruchs 2. Die Erfindung betrifft auch ein Verfahren nach dem Oberbegriff des Patentanspruchs 5 und nach dem Oberbegriff des Patentanspruchs 6. Bekannt sind Trinkwasserversorgungsvorrichtungen, bei denen Trinkwasser mittels Solarenergie in Kombination mit Durchlauferhitzern erwärmt wird. Bei hohen solaren Deckungsraten kann es dazu kommen, dass der Durchlauferhitzer nicht mehr regelmäßig von Trinkwasser durchströmt wird, da die Versorgung mit solar erwärmtem Wasser gewährleistet ist. Dadurch kann es unter hygienischen Aspekten zu Verunreinigungen in dem Durchlauferhitzer kommen, insbesondere bei einer hohen Temperatur und besonders langen Stagnationszeiten, zum Beispiel in Sommermonaten.

Aus der DE 102 12 072 B4 ist eine Vorrichtung zur Durchflussteuerung für ein solarenergiebetriebenes Warmwasser-Durchflussgerät bekannt. Diese umfasst ein Leitungssystem zum Leiten von Trinkwasser, welches ausgangsseitig mit einem Verbraucher und eingangsseitig mit einem Primärwasservorrat und einem Sekundärwasservorrat über ein Umschaltventil verbindbar ist. Dabei ist je nach Schaltung des Umschaltventils Trinkwasser über den Primärwasservorrat oder den mit dem Durchlauferhitzer beheizbaren Sekundärwasservorrat zu dem Verbraucher leitbar.

Der Erfindung liegt die Aufgabe zugrunde, ein Verfahren, eine Vorrichtung sowie eine Trinkwasserversorgungsanlage zu schaffen, bei denen die Nachteile gemäß dem Stand der Technik überwunden werden. Insbesondere ist es eine Aufgabe der Erfindung, ein Verfahren, eine Vorrichtung sowie eine Trinkwasserversorgungsanlage zu schaffen, bei welchen auf einfache Weise Verunreinigungen vermieden werden und die Trinkwasserversorgung hygienisch optimiert realisierbar ist.

Erfindungsgemäß wird dies durch die Gegenstände mit den Merkmalen des Patentanspruches 1, des Patentanspruches 2, des Patentanspruches 4, des Patentanspruchs 5 und des Patentanspruchs 6 gelöst. Vorteilhafte Weiterbildungen sind den Unteransprüchen zu entnehmen.

Die erfindungsgemäße Vorrichtung zur Durchflusssteuerung für ein solarenergiebetriebenes Warmwasser-Durchflussgerät, insbesondere für eine Trinkwasserversorgung mit Durchlauferhitzer, umfasst mindestens ein Umschaltventil, einen Primärwasservorrat, einen Sekundärwasservorrat, ein Leitungssystem zum Leiten von Trinkwasser, welches ausgangsseitig mit einem Verbraucher und eingangsseitig mit dem Primärwasservorrat und dem Sekundärwasservorrat über mindestens ein Umschaltventil verbindbar ist, und eine Steuerung zum Umschalten des Ventils.

Gekennzeichnet ist die Vorrichtung dadurch, dass je nach Schaltung des Umschaltventils Trinkwasser über den Primärwasservorrat und/oder den mit dem Durchlauferhitzer beheizbaren Sekundärwasservorrat zu dem Verbraucher leitbar ist, wobei Mittel zum Vermeiden von Trinkwasserstagnation in der Vorrichtung, insbesondere in dem Sekundärwasservorrat ein schließlich eines Durchlauferhitzers, vorgesehen sind. Der Primärwasservorrat ist bevorzugt ein mittels Solarenergie beheizbarer Wasservorrat, welcher für einen solarautarken Betrieb ausgebildet sein kann und keine zusätzliche Energiequellen erfordert. Der Sekundärwasservorrat ist bevorzugt ein Reservewasservorrat, in dem Trinkwasser mittels eines Durchlauferhitzers erwärmt wird, um einen Verbraucher mit Warmwasser zu versorgen, wenn hierzu der Primärwasservorrat, und besonders das primärseitig zur Verfügung stehende Temperaturniveau, nicht ausreicht. Die Mittel vermeiden bevorzugt eine Stagnation von Trinkwasser in dem Sekundärwasservorrat bzw. den entsprechenden Leitungen, sodass es hier nicht oder nur schwer zu Verunreinigungen aufgrund von Wasserstagnation und/oder hohen Temperaturen kommt.

Gemäß der vorliegenden Erfindung ist vorgesehen, dass die Mittel eine Leitungseinheit umfassen, über welche Trinkwasser aus dem Sekundärwasservorrat auch bei einer Verbindung des Leitungssystems mit dem Primärwasservorrat zu dem Verbraucher fließen kann. Dabei ist vorgesehen, dass die Leitungseinheit eine Leckageleitung umfasst, über welche ein Leckagetrinkwasserfluss aus dem Sekundärwasservorrat zu dem Verbraucher fließen kann. Die Leitungseinheit ist als eine das Umschaltventil umgehende Bypassleitung ausgebildet.

Hierdurch wird die Versorgung nicht nur ausschließlich durch einen Wasservorrat, also den primären oder den sekundären Wasservorrat, sondern durch beide Wasservorräte realisiert. Diese Versorgung kann nacheinander geschaltet oder parallel geschaltet erfolgen. Bevorzugt erfolgt die Versorgung in einem Ausführungsbeispiel parallel, sodass trotz einer Wasserversorgung durch den Primärwasservorrat stets auch parallel dazu eine Versorgung über den Sekundärwasservorrat erfolgt. Auf diese Weise wird eine Wasserstagnation, insbesondere in dem Sekundärwasservorrat, effektiv vermieden. Wenn das Umschaltventil so geschaltet ist, dass die Trinkwasserversorgung über den Primärwasservorrat erfolgt, gelangt trotzdem ein Leckagetrinkwasserfluss über den Durchlauferhitzer zu dem Verbraucher. Dieser Leckagetrinkwasserfluss ist deutlich geringer als der Wasserfluss von dem Primärwasservorrat. Er verhindert dennoch eine Wasserstagnation in dem Sekundärwasservorrat.

Statt einer Leckageleitung, welche durch das Umschaltventil verläuft, oder zusätzlich, lässt sich eine das Umschaltventil umgehende Leitung, die Bypassleitung, vorsehen. Diese Bypassleitung kann mit einem Ventil versehen sein, sodass sich die Bypassleitung zu- und/oder abschalten lässt. Sie kann aber auch als permanent geöffnete Leitung ausgebildet sein. Der Wasserfluss durch die Bypassleitung ist bevorzugt geringer als der Wasserfluss aus dem Primärwasservorrat.

Eine zweite Erfindung, die mit der ersten Erfindung in der Weise verbunden ist, dass sie eine einzige allgemeine erfinderische Idee verwirklichen, sieht vor, dass die Leitungseinheit eine Leckageleitung umfasst, über welche ein Leckagetrinkwasserfluss aus dem Sekundärwasservorrat zu dem Verbraucher fließen kann. Die Leckageleitung ist als in das Umschaltventil integriertes Undichtigkeitsteil ausgebildet. In diesem Fall muss keine eigene Leitung in das Umschaltventil integriert werden. Es reicht aus, wenn das Umschaltventil beim Umschalten auf den Primärwasservorrat die Zufuhr von dem Sekundärwasservorrat nicht komplett schließt, sodass ein geringer Wasserfluss aus dem Sekundärwasservorrat stets fließen kann.

Noch ein weiteres Ausführungsbeispiel der vorliegenden Erfindung sieht vor, dass die Mittel einen Schaltmechanismus umfassen, welcher gesteuert eine Verbindung des Sekundärwasservorrats mit dem Leitungssystem unabhängig von dem Zustand des Primärwasservorrats schaltet, sodass gesteuert Trinkwasser aus dem Sekundärwasservorrat zu dem Verbraucher fließt. Im Gegensatz zu der parallelen Zuschaltung des Sekundärwasservorrats erfolgt hier eine Vermeidung einer Wasserstagnation in dem Sekundärwasservorrat dadurch, dass dieser auch bei einer ausreichenden Versorgung durch den Primärwasservorrat gesteuert zugeschaltet wird.

Dieses gesteuerte Zu- oder Umschalten kann zeitgesteuert, volumenstromgesteuert oder auf andere Art erfolgen.

Die erfindungsgemäße solare Trinkwasserversorgungsanlage, zur Trinkwasserversorgung von Verbrauchern umfasst einen Primärwasservorrat zur primären Trinkwasserversorgung des Verbrauchers und einen Sekundärwasservorrat zur sekundären Trinkwasserversorgung des Verbrauchers, insbesondere mit einem Durchlauferhitzer.

Gekennzeichnet ist die Trinkwasserversorgungsanlage dadurch, dass weitere eine erfindungsgemäße Vorrichtung zur Durchflusssteuerung vorgesehen ist, um die Wasservorräte mit dem Verbraucher fluidisch zu verbinden, sodass eine Trinkwasserstagnation in der Vorrichtung vermieden wird.

Das erfindungsgemäße Verfahren zur Durchflusssteuerung für ein solarenergiebetriebenes Warmwasser-Durchflussgerät, insbesondere für eine Trinkwasserversorgung mit Durchlauferhitzer, umfasst die Schritte Leiten von Trinkwasser über mindestens ein Umschaltventil, einen Primärwasservorrat, einen Sekundärwasservorrat, ein Leitungssystem, wobei das Leitungssystem ausgangsseitig mit einem Verbraucher und eingangsseitig mit dem Primärwasservorrat und dem Sekundärwasservorrat über mindestens ein Umschaltventil verbunden ist; Schalten des Umschaltventils; Das Verfahren ist gekennzeichnet durch die weiteren Schritte Leiten des Trinkwassers über den Primärwasservorrat und/oder den mit einem Durchlauferhitzer beheizbaren Sekundärwasservorrat zu dem Verbraucher je nach Schaltung des Umschaltventils; Vermeiden von Trinkwasserstagnation in der Vorrichtung, insbesondere in dem Sekundärwasservorrat, indem ein Leckagetrinkwasserfluss über eine eine Leckageleitung umfassende Leitungseinheit aus dem Sekundärwasservorrat auch bei einer Verbindung des Leitungssystems mit dem Primärwasservorrat zu dem Verbraucher fließt, wobei die Leitungseinheit als eine das Umschaltventil umgehende Bypassleitung ausgebildet ist.

Ein zweites erfindungsgemäßes Verfahren zur Durchflusssteuerung für ein solarenergiebetriebenes Warmwasser-Durchflussgerät, insbesondere für eine Trinkwasserversorgung mit Durchlauferhitzer, das mit dem vorstehend beschriebenen Verfahren in der Weise verbunden ist, dass sie eine einzige allgemeine erfinderische Idee verwirklichen, ist gekennzeichnet durch die weiteren Schritte Leiten des Trinkwassers über den Primärwasservorrat und/oder den mit einem Durchlauferhitzer beheizbaren Sekundärwasservorrat zu dem Verbraucher je nach Schaltung des Umschaltventils; Vermeiden von Trinkwasserstagnation in der Vorrichtung, insbesondere in dem Sekundärwasservorrat, indem ein Leckagetrinkwasserfluss über eine eine Leckageleitung umfassende Leitungseinheit aus dem Sekundärwasservorrat auch bei einer Verbindung des Leitungssystems mit dem Primärwasservorrat zu dem Verbraucher fließt, wobei die Leckageleitung als in das Umschaltventil (9) integriertes Undichtigkeitsteil ausgebildet ist.

In einer Ausführungsform lässt sich eine Funktion in entsprechende Solarregler für Gemeinschaftssolarthermiesysteme integrieren, über welche ein Schalten des Umschaltventils in bestimmten Zeitabständen realisiert wird, um den Sekundärwasservorrat von Trinkwasser durchströmen zu lassen. Hierzu wäre eine Hilfsenergie für das Schalten erforderlich. Weiter kann der Weg durch den Sekundärwasservorrat nicht ganz dicht ausgebildet werden. Hierzu lässt man eine Soll-Leckage zu, die einen Austausch entsprechender Wassermengen über einen zeitlichen Rahmen ermöglicht. Beispielweise einen halben Tag bei einer normalen Standardzapfmenge. Dies hat nur eine geringe Fehlzirkulation bei entsprechender Auslegung zur Folge, sodass auch keine wesentlichen Wärmeverluste oder Schwankungen hinsichtlich der Warmwasser-Auslauftemperatur auftreten. Zudem kann zum Beispiel bei Komplettgeräten die Soll-Leckage durch eine Bypassleitung realisiert werden, die Wasser mit einem kleinen Massen- oder Volumenstrom durch den Sekundärwasservorrat leitet, sobald Trinkwasser gezapft wird. Auch ist es in einer Ausführungsform möglich, zum Beispiel bei Lösungen mit einem systemfremden Sekundärwasservorrat, eine Undichtigkeit in dem Umschaltventil, zum Beispiel in Richtung Sekundärwasservorrat, vorzusehen.

Mit dem erfindungsgemäßen Verfahren, der erfindungsgemäßen Vorrichtung sowie der erfindungsgemäßen Trinkwasserversorgungsanlage werden insbesondere die folgenden Vorteile realisiert: Es wird die Versorgung mit einem hygienisch unbelasteten Trinkwarmwasser aus dem gesamten System gewährleistet, da keine Stagnation von Trinkwasser in dem System auftritt. Zudem wird eine kontrollierte solare Vorwärmung des Sekundärwassers ermöglicht, das heißt, die erfindungsgemäße Lösung vermeidet einen Kaltstart von Gasdurchlauferhitzern in dem System.

Die Zeichnungen stellen zwei Ausführungsbeispiele der Erfindung dar. Es zeigt:
- Fig. 1: schematisch einen Ausschnitt eines solaren Wärmegewinnungssystems einer Trinkwasserversorgungsanlage,
- Fig. 2: schematisch eine erste Ausführungsform einer Vorrichtung zur Durchflusssteuerung und
- Fig. 3: schematisch eine zweite Ausführungsform einer Vorrichtung zur Durchflusssteuerung.

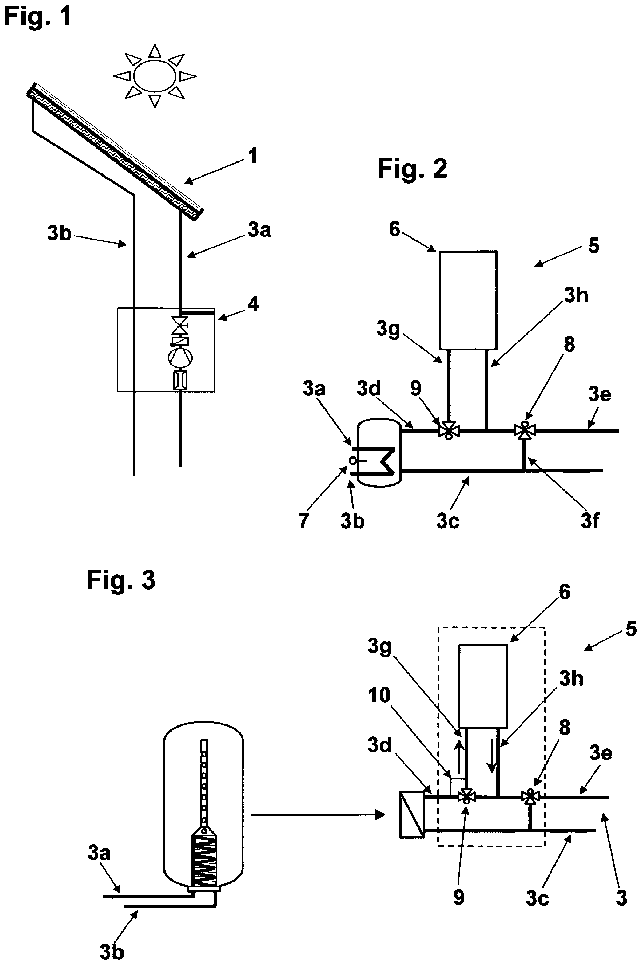

Fig. 1 zeigt schematisch einen Ausschnitt mit einem solaren Wärmegewinnungssystem für eine Trinkwasserversorgungsanlage 1. Die Trinkwasserversorgungsanlage 1 umfasst in der Fig. 1 ein Solarkollektor 2, mit welchem ein Wärmeträger, welcher in einer Leitung 3a eines Leitungssystems 3 durch das Solarkollektor 2 geführt wird, erwärmt wird. Der Wärmeträger dient zur Erwärmung eines in Fig. 1 nicht dargestellten Primärwasservorrats und wird über eine Leitung 3b des Leitungssystems 3 von dem Solarkollektor 2 zur weiteren Verwendung abgeführt. Um den Wärmeträger durch das Leitungssystem 3 zu führen, sind entsprechende bekannte hydraulische Vorrichtungen 4 vorgesehen, die hier im Einzelnen nicht näher beschrieben werden.

Fig. 2 zeigt schematisch eine erste Ausführungsform einer Vorrichtung 5 zur Durchflusssteuerung. Die Trinkwasserversorgung erfolgt primär aus einem Primärwasservorrat 7, welcher als Wärmespeicher ausgebildet ist. Das frische Trinkwasser im Primärwasservorrat 7 wird durch den über die Leitungen 3b, 3a zu- bzw. abgeführten Wärmeträger im Solarkreislauf erwärmt. Das Trinkwasser kann dem Primärwasservorrat 7 über die Leitungen 3c, 3d entnommen werden, wobei an einer Leitung 3c kaltes Wasser und an einer Leitung 3d heißes oder erwärmtes Wasser zur Verfügung gestellt wird. Das Wasser kann über eine Leitung 3e einem Verbraucher (hier nicht dargestellt) zur Verfügung gestellt werden, wobei über ein erstes Umschaltventil 8 und einen Leitungsabschnitt 3f kaltes Wasser und erwärmtes Wasser je nach Bedarf mischbar sind.

Damit eine Versorgung des Verbrauchers sichergestellt ist, auch wenn die Kapazität des durch Solarenergie erwärmten Primärwasservorrats 7 nicht für den Verbraucher ausreicht, ist ein Sekundärwasservorrat 6 vorgesehen, welcher über herkömmliche Mittel erwärmt wird. Die Leitung 3d führt hierzu über ein zweites Umschaltventil 9, über welches die Leitung 3d mit der von dem Sekundärwasservorrat 6 kommenden Leitung 3g koppelbar ist, sofern eine durch den Wärmespeicher erwärmte Wassermenge in der Leitung 3d nicht ausreicht.

Insbesondere bei geringen Zapfraten, bei hohen Außentemperaturen und/oder starker Sonnenstrahlung ist in der Regel kein zusätzlich erwärmtes Wasser aus dem Sekundärwasservorrat 6 erforderlich. Dabei kann es aufgrund von unzureichendem Austausch des Wassers in dem Sekundärwasservorrat 6 zu Stagnationen oder Verunreinigungen kommen. Erfindungsgemäß ist eine von dem Sekundärwasservorrat 6 abgehende Leckageleitung vorgesehen. Die Leckageleitung kann durch eine separate, von dem Sekundärwasservorrat 6 abgehende Leitung 3h und/oder durch eine Undichtigkeit in dem Umschaltventil 9 ausgebildet sein, sodass Trinkwasser auch bei geschlossener Ventilschaltung des Umschaltventils 9 zu bzw. auch von dem Sekundärwasservorrat 6 strömen kann. Auf diese Weise wird eine Trinkwasserstagnation in dem Sekundärwasservorrat 6 vermieden.

Fig. 3 zeigt schematisch eine zweite Ausführungsform einer Vorrichtung zur Durchflusssteuerung 5. Die Ausführungsform der Fig. 3 unterscheidet sich im Wesentlichen durch das zweite Umschaltventil 9 und eine das zweite Umschaltventil 9 umgehende Bypassleitung 10. Die Vorrichtung 5 weist in Fig. 3 zusätzlich die Leckageleitung 3h auf, welche beim Betrieb des Durchlauferhitzers der Vorlaufleitung entspricht. Die Bypassleitung 10 verbindet die Leitung 3g mit dem Leitungsabschnitt 3d zwischen dem zweiten Umschaltventil 9 und dem Primärwasservorrat 7. In anderen Ausgestaltungen verbindet die Bypassleitung 10 den Abschnitt 3g mit einem Abschnitt hinter dem Umschaltventil 9. Durch die Zufuhr vor dem Umschaltventil 9 ist jedoch eine Durchflussmenge durch das Umschaltventil 9 besser einstellbar. Über die Bypassleitung 10 strömt Trinkwasser von bzw. zu dem Sekundärwasservorrat 6 unabhängig von einer Ventilstellung. Das erste Umschaltventil 8 fungiert als Warmwassermischer, mit welchem sich ein Warmwasserstrom und ein Kaltwasserstrom mischen lassen. Die Einheit, umfassend die Umschaltventile 8, 9 und den Sekundärwasservorrat 6 sowie die entsprechenden Leitungsabschnitte, lässt sich zum Beispiel zu einer Thermen-Einheit integrieren, wie durch das gestrichelte Rechteck dargestellt.

Wie in Fig. 3 schematisch angedeutet, wird das Wasser in dem Wärmespeicher durch den über die Leitungen 3a, 3b zu- bzw. abgeführten Wärmeträger im Solarkreislauf erwärmt.

## Patentansprüche

1. Vorrichtung zur Durchflusssteuerung (5) für ein solarenergiebetriebenes Warmwasser-Durchflussgerät, insbesondere für eine Trinkwasserversorgung mit Durchlauferhitzer, umfassend mindestens ein Umschaltventil (9), einen Primärwasservorrat (7), einen Sekundärwasservorrat (6), ein Leitungssystem (3) zum Leiten von Trinkwasser, wobei das Leitungssystem (3) ausgangsseitig mit einem Verbraucher und eingangsseitig mit dem Primärwasservorrat (7) und dem Sekundärwasservorrat (6) über mindestens ein Umschaltventil (9) verbindbar ist, und eine Steuerung zum Umschalten des Ventils (9), wobei Mittel zum Vermeiden von Trinkwasserstagnation in der Vorrichtung, insbesondere in dem Sekundärwasservorrat (6) vorgesehen sind, **dadurch gekennzeichnet, dass** je nach Schaltung des Umschaltventils (9) Trinkwasser über den Primärwasservorrat (7) und/oder den mit einem Durchlauferhitzer beheizbaren Sekundärwasservorrat (6) zu dem Verbraucher leitbar ist, wobei die Mittel eine Leitungseinheit umfassen, über welche Trinkwasser aus dem Sekundärwasservorrat (6) auch bei einer Verbindung des Leitungssystems (3) mit dem Primärwasservorrat (7) zu dem Verbraucher fließen kann,
wobei die Leitungseinheit eine Leckageleitung umfasst, über welche ein Leckagetrinkwasserfluss aus dem Sekundärwasservorrat (6) zu dem Verbraucher fließen kann, wobei die Leitungseinheit als eine das Umschaltventil (9) umgehende Bypassleitung (10) ausgebildet ist.

2. Vorrichtung zur Durchflusssteuerung (5) für ein solarenergiebetriebenes Warmwasser-Durchflussgerät, insbesondere für eine Trinkwasserversorgung mit Durchlauferhitzer, umfassend mindestens ein Umschaltventil (9), einen Primärwasservorrat (7), einen Sekundärwasservorrat (6), ein Leitungssystem (3) zum Leiten von Trinkwasser, wobei das Leitungssystem (3) ausgangsseitig mit einem Verbraucher und eingangsseitig mit dem Primärwasservorrat (7) und dem Sekundärwasservorrat (6) über mindestens ein Umschaltventil (9) verbindbar ist, und eine Steuerung zum Umschalten des Ventils (9), wobei Mittel zum Vermeiden von Trinkwasserstagnation in der Vorrichtung, insbesondere in dem Sekundärwasservorrat (6) vorgesehen sind, **dadurch gekennzeichnet, dass** je nach Schaltung des Umschaltventils (9) Trinkwasser über den Primärwasservorrat (7) und/oder den mit einem Durchlauferhitzer beheizbaren Sekundärwasservorrat (6) zu dem Verbraucher leitbar wobei die Mittel eine Leitungseinheit umfassen, über welche Trinkwasser aus dem Sekundärwasservorrat (6) auch bei einer Verbindung des Leitungssystems (3) mit dem Primärwasservorrat (7) zu dem Verbraucher fließen kann,
wobei die Leitungseinheit eine Leckageleitung umfasst, über welche ein Leckagetrinkwasserfluss aus dem Sekundärwasservorrat (6) zu dem Verbraucher fließen kann, wobei die Leckageleitung als in das Umschaltventil (9) integriertes Undichtigkeitsteil ausgebildet ist.

3. Vorrichtung nach einem der vorherigen Ansprüche,
**dadurch gekennzeichnet, dass** die Mittel einen Schaltmechanismus zur gesteuerten Schaltung einer Verbindung des Sekundärwasservorrats (6) mit dem Leitungssystem (3) unabhängig von dem Zustand des Primärwasservorrats (7) umfassen, sodass gesteuert Trinkwasser aus dem Sekundärwasservorrat (6) zu dem Verbraucher fließt.

4. Solare Trinkwasserversorgungsanlage, zur Trinkwasserversorgung von Verbrauchern, umfassend einen Primärwasservorrat (7) zur primären Trinkwasserversorgung des Verbrauchers und einen Sekundärwasservorrat (6) zur sekundären Trinkwasserversorgung des Verbrauchers,
**dadurch gekennzeichnet, dass** eine weitere Vorrichtung zur Durchflusssteuerung (5) nach einem der vorherigen Ansprüche 1 bis 3 vorgesehen ist, um die Wasservorräte mit dem Verbraucher fluidisch zu verbinden, sodass eine Trinkwasserstagnation in der Vorrichtung (5) vermieden wird.

5. Verfahren zur Durchflusssteuerung für ein solarenergiebetriebenes Warmwasser-Durchflussgerät, insbesondere für eine Trinkwasserversorgung mit Durchlauferhitzer, umfassend die Schritte
Leiten von Trinkwasser über mindestens ein Umschaltventil (9), einen Primärwasservorrat (7), einen Sekundärwasservorrat (6), ein Leitungssystem (3), wobei das Leitungssystem (3) ausgangsseitig mit einem Verbraucher und eingangsseitig mit dem Primärwasservorrat (7) und dem Sekundärwasservorrat (6) über das mindestens ein Umschaltventil (9) verbunden ist,
Schalten des Umschaltventils (9),
**gekennzeichnet durch** die weiteren Schritte
Leiten des Trinkwassers über den Primärwasservorrat (7) und/oder den mit einem Durchlauferhitzer beheizbaren Sekundärwasservorrat (6) zu dem Verbraucher je nach Schaltung des Umschaltventils (9),
Vermeiden von Trinkwasserstagnation in der Vorrichtung, insbesondere in dem Sekundärwasservorrat (6), indem ein Leckagetrinkwasserfluss über eine eine Leckageleitung umfassende Leitungseinheit aus dem Sekundärwasservorrat (6) auch bei einer Verbindung des Leitungssystems (3) mit dem Primärwasservorrat (7) zu dem Verbraucher fließt, wobei die Leitungseinheit als eine das Umschaltventil (9) umgehende Bypassleitung (10) ausgebildet ist.

6. Verfahren zur Durchflusssteuerung für ein solarenergiebetriebenes Warmwasser-Durchflussgerät, insbesondere für eine Trinkwasserversorgung mit Durchlauferhitzer, umfassend die Schritte
Leiten von Trinkwasser über mindestens ein Umschaltventil (9), einen Primärwasservorrat (7), einen Sekundärwasservorrat (6), ein Leitungssystem (3), wobei das Leitungssystem (3) ausgangsseitig mit einem Verbraucher und eingangsseitig mit dem Primärwasservorrat (7) und dem Sekundärwasservorrat (6) über mindestens ein Umschaltventil (9) verbunden ist,
Schalten des Umschaltventils (9),
**gekennzeichnet durch** die weiteren Schritte
Leiten des Trinkwassers über den Primärwasservorrat (7) und/oder den mit einem Durchlauferhitzer beheizbaren Sekundärwasservorrat (6) zu dem Verbraucher je nach Schaltung des Umschaltventils (9),
Vermeiden von Trinkwasserstagnation in der Vorrichtung, insbesondere in dem Sekundärwasservorrat (6), indem ein Leckagetrinkwasserfluss über eine eine Leckageleitung umfassende Leitungseinheit aus dem Sekundärwasservorrat (6) auch bei einer Verbindung des Leitungssystems (3) mit dem Primärwasservorrat (7) zu dem Verbraucher fließt, wobei die Leckageleitung als in das Umschaltventil (9) integriertes Undichtigkeitsteil ausgebildet ist.

## Claims

1. Throughput control device (5) for a solar-operated hot-water flow device, in particular for a drinking water supply with continuous heater, comprising at least one switch valve (9), a primary water supply (7), a secondary water supply (6), a line system (3) for carrying drinking water, the line system (3) being connectable on the output side to a consumer and on the input side to the primary water supply (7) and the secondary water supply (6) via at least one switch valve (9), and a control system for switching the valve (9), means being provided for avoiding drinking water stagnation in the device, in particular in the secondary water supply (6),
**characterized in that**, depending on the switching of the switch valve (9), drinking water can be led to the consumer via the primary water supply (7) and/or the secondary water supply (6) that can be heated by a continuous heater, wherein the means comprise a line unit, via which drinking water can flow to the consumer from the secondary water supply (6) even when the line system (3) is connected to the primary water supply (7),
wherein the line unit comprises a leakage line, via which a leakage flow of drinking water can flow from the secondary water supply (6) to the consumer, wherein the line unit is formed as a bypass line (10) bypassing the switch valve (9).

2. Throughput control device (5) for a solar-operated hot-water flow device, in particular for a drinking water supply with continuous heater, comprising at least one switch valve (9), a primary water supply (7), a secondary water supply (6), a line system (3) for carrying drinking water, the line system (3) being connectable on the output side to a consumer and on the input side to the primary water supply (7) and the secondary water supply (6) via at least one switch valve (9), and a control system for switching the valve (9), means being provided for avoiding drinking water stagnation in the device, in particular in the secondary water supply (6), **characterized in that**, depending on the switching of the switch valve (9), drinking water can be led to the consumer via the primary water supply (7) and/or the secondary water supply (6) that can be heated by a continuous heater, wherein the means comprise a line unit, via which drinking water can flow to the consumer from the secondary water supply (6) even when the line system (3) is connected to the primary water supply (7),
wherein the line unit comprises a leakage line, via which a leakage flow of drinking water can flow from the secondary water supply (6) to the consumer, wherein the leakage line is formed as a leaky part integrated into the switch valve (9).

3. Device according to one of the preceding claims,
**characterized in that** the means comprise a switching mechanism for the controlled switching of a connection of the secondary water supply (6) to the line system (3) independently of the state of the primary water supply (7), so that drinking water flows from the secondary water supply (6) to the consumer under control.

4. Solar drinking water supply system, for the drinking water supply to consumers, comprising a primary water supply (7) for the primary drinking water supply of the consumer and a secondary water supply (6) for the secondary drinking water supply of the consumer,
**characterized in that** a further throughput control device (5) according to one of the preceding Claims 1 to 3 is provided in order to connect the water supplies fluidically to the consumer, so that drinking water stagnation in the device (5) is avoided.

5. Throughput control method for a solar-operated hot-water flow device, in particular for a drinking water supply with continuous heater, comprising the steps
leading drinking water via at least one switch valve (9), a primary water supply (7), a secondary water supply (6), a line system (3), the line system (3) being connected on the output side to a consumer and on the input side to the primary water supply (7) and the secondary water supply (6) via the at least one switch valve (9), switching the switch valve (9),
**characterized by** the further steps
leading the drinking water to the consumer via the primary water supply (7) and/or the secondary water supply (6) that can be heated by a continuous heater, depending on the switching of the switch valve (9),
avoiding drinking water stagnation in the device, in particular in the secondary water supply (6), in that a leakage flow of drinking water flows to the consumer from the secondary water supply (6) via a line unit comprising a leakage line even when the line system (3) is connected to the primary water supply (7), wherein the line unit is formed as a bypass line (10) bypassing the switch valve (9).

6. Throughput control method for a solar-operated hot-water flow device, in particular for a drinking water supply with continuous heater, comprising the steps
leading drinking water via at least one switch valve (9), a primary water supply (7), a secondary water supply (6), a line system (3), the line system (3) being connected on the output side to a consumer and on the input side to the primary water supply (7) and the secondary water supply (6) via at least one switch valve (9),
switching the switch valve (9),
**characterized by** the further steps
leading the drinking water to the consumer via the primary water supply (7) and/or the secondary water supply (6) that can be heated by a continuous heater, depending on the switching of the switch valve (9),
avoiding drinking water stagnation in the device, in particular in the secondary water supply (6), in that a leakage flow of drinking water flows to the consumer from the secondary water supply (6) via a line unit comprising a leakage line even when the line system (3) is connected to the primary water supply (7), wherein the leakage line is formed as a leaky part integrated into the switch valve (9).

## Revendications

1. Dispositif de commande de débit (5) pour un appareil de débit d'eau chaude fonctionnant à l'énergie solaire, en particulier pour une alimentation d'eau potable comprenant un chauffe-eau instantané, comprenant au moins une soupape de commutation (9), une réserve d'eau primaire (7), une réserve d'eau secondaire (6), un système de conduites (3) pour conduire l'eau potable, le système de conduites (3) pouvant être connecté du côté de la sortie à un consommateur et du côté de l'entrée à la réserve d'eau primaire (7) et à la réserve d'eau secondaire (6) par le biais d'au moins une soupape de commutation (9), et une commande pour commuter la soupape (9), des moyens étant prévus pour éviter la stagnation d'eau potable dans le dispositif, en particulier dans la réserve d'eau secondaire (6),
**caractérisé en ce qu'**en fonction de la commutation de la soupape de commutation (9), de l'eau potable peut être conduite au consommateur par le biais de la réserve d'eau primaire (7) et/ou de la réserve d'eau secondaire (6) pouvant être chauffée avec un chauffe-eau instantané,
les moyens comprenant une unité de conduite par le biais de laquelle de l'eau potable peut s'écouler jusqu'au consommateur depuis la réserve d'eau secondaire (6) également dans le cas d'une connexion du système de conduites (3) à la réserve d'eau primaire (7),
l'unité de conduite comprenant une conduite de fuite par le biais de laquelle un flux d'eau potable de fuite peut s'écouler hors de la réserve d'eau secondaire (6) jusqu'au consommateur, l'unité de conduite étant réalisée sous forme de conduite de dérivation (10) contournant la soupape de commutation (9).

2. Dispositif de commande de débit (5) pour un appareil de débit d'eau chaude fonctionnant à l'énergie solaire, en particulier pour une alimentation d'eau potable comprenant un chauffe-eau instantané, comprenant au moins une soupape de commutation (9), une réserve d'eau primaire (7), une réserve d'eau secondaire (6), un système de conduites (3) pour conduire l'eau potable, le système de conduites (3) pouvant être connecté du côté de la sortie à un consommateur et du côté de l'entrée à la réserve d'eau primaire (7) et à la réserve d'eau secondaire (6) par le biais d'au moins une soupape de commutation (9), et une commande pour commuter la soupape (9), des moyens étant prévus pour éviter la stagnation d'eau potable dans le dispositif, en particulier dans la réserve d'eau secondaire (6),
**caractérisé en ce qu'**en fonction de la commutation de la soupape de commutation (9), de l'eau potable peut être conduite au consommateur par le biais de la réserve d'eau primaire (7) et/ou de la réserve d'eau secondaire (6) pouvant être chauffée avec un chauffe-eau instantané,
les moyens comprenant une unité de conduite par le biais de laquelle de l'eau potable peut s'écouler jusqu'au consommateur depuis la réserve d'eau secondaire (6) également dans le cas d'une connexion du système de conduites (3) à la réserve d'eau primaire (7),
l'unité de conduite comprenant une conduite de fuite par le biais de laquelle un flux d'eau potable de fuite peut s'écouler hors de la réserve d'eau secondaire (6) jusqu'au consommateur, la conduite de fuite étant réalisée sous forme de pièce de fuite intégrée dans la soupape de commutation (9).

3. Dispositif selon l'une quelconque des revendications précédentes,
**caractérisé en ce que** les moyens comprennent un mécanisme de commutation pour la commutation commandée d'une connexion de la réserve d'eau secondaire (6) au système de conduites (3) indépendamment de l'état de la réserve d'eau primaire (7), de telle sorte que de l'eau potable puisse s'écouler de manière commandée depuis la réserve d'eau secondaire (6) jusqu'au consommateur.

4. Installation solaire d'alimentation en eau potable, pour l'alimentation en eau potable de consommateurs, comprenant une réserve d'eau primaire (7) pour l'alimentation en eau potable primaire du consommateur et une réserve d'eau secondaire (6) pour l'alimentation en eau potable secondaire du consommateur,
**caractérisée en ce qu'**un dispositif supplémentaire est prévu pour la commande de débit (5) selon l'une quelconque des revendications 1 à 3, afin de relier fluidiquement les réserves d'eau au consommateur de telle sorte qu'une stagnation d'eau potable dans le dispositif (5) soit évitée.

5. Procédé de commande de débit pour un appareil de débit d'eau chaude fonctionnant à l'énergie solaire, en particulier pour une alimentation en eau potable avec un chauffe-eau instantané, comprenant les étapes suivantes :
acheminer de l'eau potable par le biais d'au moins une soupape de commutation (9), une réserve d'eau primaire (7), une réserve d'eau secondaire (6), un système de conduites (3), le système de conduites (3) étant connecté du côté de la sortie à un consommateur et du côté de l'entrée à la réserve d'eau primaire (7) et à la réserve d'eau secondaire (6) par le biais de l'au moins une soupape de commutation (9),
commuter la soupape de commutation (9),
**caractérisé par** les étapes suivantes :
acheminer au consommateur de l'eau potable par le biais de la réserve d'eau primaire (7) et/ou de la réserve d'eau secondaire (6) pouvant être chauffée avec un chauffe-eau instantané en fonction de la commutation de la soupape de commutation (9),
éviter une stagnation de l'eau potable dans le dispositif, en particulier dans la réserve d'eau secondaire (6) en faisant s'écouler un flux d'eau potable de fuite par le biais d'une unité de conduite comprenant une conduite de fuite depuis la réserve d'eau secondaire (6) jusqu'au consommateur également dans le cas d'une connexion du système de conduites (3) au réservoir d'eau primaire (7), l'unité de conduite étant réalisée sous forme de conduite de dérivation (10) contournant la soupape de commutation (9).

6. Procédé de commande de débit pour un appareil de débit d'eau chaude fonctionnant à l'énergie solaire, en particulier pour une alimentation en eau potable avec un chauffe-eau instantané, comprenant les étapes suivantes :
acheminer de l'eau potable par le biais d'au moins une soupape de commutation (9), une réserve d'eau primaire (7), une réserve d'eau secondaire (6), un système de conduites (3), le système de conduites (3) étant connecté du côté de la sortie à un consommateur et du côté de l'entrée à la réserve d'eau primaire (7) et à la réserve d'eau secondaire (6) par le biais d'au moins une soupape de commutation (9),
commuter la soupape de commutation (9),
**caractérisé par** les étapes supplémentaires suivantes :
acheminer de l'eau potable jusqu'au consommateur par le biais de la réserve d'eau primaire (7) et/ou de la réserve d'eau secondaire (6) pouvant être chauffée avec un chauffe-eau instantané en fonction de la commutation de la soupape de commutation (9),
éviter une stagnation d'eau potable dans le dispositif, en particulier dans la réserve d'eau secondaire (6), en faisant s'écouler un flux d'eau potable de fuite par le biais d'une unité de conduite comprenant une conduite de fuite depuis la réserve d'eau secondaire (6) également dans le cas d'une connexion du système de conduites (3) au réservoir d'eau primaire (7) jusqu'au consommateur, la conduite de fuite étant réalisée sous forme de pièce de fuite intégrée dans la soupape de commutation (9).
